(19) Europäisches Patentamt
European Patent Office
Office européen des brevets

(11) **EP 4 095 735 A1**

(12) **EUROPEAN PATENT APPLICATION**

(43) Date of publication:
**30.11.2022 Bulletin 2022/48**

(21) Application number: **21305691.4**

(22) Date of filing: **26.05.2021**

(51) International Patent Classification (IPC):
*G06F 30/20* (2020.01)     *G06F 30/23* (2020.01)
*G06F 30/25* (2020.01)     *G06F 30/28* (2020.01)
*G06F 111/10* (2020.01)     *G06F 113/06* (2020.01)
*G06F 113/08* (2020.01)

(52) Cooperative Patent Classification (CPC):
**G06F 30/20; G06F 30/23; G06F 30/25;**
**G06F 30/28;** G06F 2111/10; G06F 2113/06;
G06F 2113/08

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **TotalEnergies OneTech**
**92400 Courbevoie (FR)**

(72) Inventor: **FRAMBATI, Stefano**
**Pau (FR)**

(74) Representative: **Bandpay & Greuter**
**30, rue Notre-Dame des Victoires**
**75002 Paris (FR)**

(54) **PERFORMING A DEFORMATION-BASED PHYSICS SIMULATION**

(57) The disclosure relates to a computer-implemented method for performing a deformation-based physics simulation described by a partial differential equation. The method comprises providing a geometrical model representing a portion of the real world. The method comprises performing a hybrid discretization of the model. The performing of the hybrid discretization comprises discretizing one or more first objects in the portion each with a mesh and one or more second objects in the portion each with a point cloud. The method comprises one or more iterations. Each iteration comprises performing a simulation run based on a discretization of the partial differential equation and on the hybrid discretization. The iteration comprises assessing a deformation as a result of the simulation run. The deformation corresponds to a shape deformation of the one or more second objects. The iteration comprises updating the hybrid discretization to model the deformation by moving points of a point cloud.

EP 4 095 735 A1

**Description**

**TECHNICAL FIELD**

The disclosure relates to the field of computer programs and systems, and more specifically to a method, system and program for performing a deformation-based physics simulation.

**BACKGROUND**

Physics simulations are gaining wide importance in the industrial context. These simulations allow to perform tests and experiments beforehand, *i.e.* upstream of an industrial process such as manufacturing, production or exploitation. Simulations model the behavior of physical systems of objects described by one or more partial differential equations or differential equations.

For some simulations, the physical system to simulate has a geometry and/or topology which is complex, unknown, evolutive, and/or to be optimized, and/or features significant deformations or tear. This may be the case for example for inverse problem simulations or optimal control simulations.

For these simulations, existing simulation methods based on a sole meshing are not adapted as they inherently feature excessive deformations of the meshing. Furthermore, the meshing is often expensive in terms of computing resources, which makes these methods lack robustness and efficiency. Other methods based on isogeometric analysis rely on a regular structure and cannot describe complex geometries.

Within this context, there is a need for an improved method for performing a deformation-based physics simulation.

**SUMMARY**

It is therefore provided a computer-implemented method for performing a deformation-based physics simulation. The physics simulation is described by a partial differential equation. The method comprises providing a geometrical model. The geometrical model represents a portion of the real world. The method further comprises performing a hybrid discretization of the model. The performing of the hybrid discretization comprises discretizing one or more first objects in the portion each with a mesh and one or more second objects in the portion each with a point cloud. The method further comprises one or more iterations. Each iteration comprises performing a simulation run. The performing of the simulation run is based on a discretization of the partial differential equation and on the hybrid discretization. The iteration further comprises assessing a deformation as a result of the simulation run. The deformation corresponds to a shape deformation of the one or more second objects. The iteration further comprises updating the hybrid discretization to model the deformation by moving points of a point cloud.

The method may comprise one or more of the following:

- the performing of a hybrid discretization comprises:

  ∘ discretizing each object in the portion, each with a respective point cloud;
  ∘ providing a basis of interpolating piecewise polynomial functions, where for each subset of points of a point cloud discretizing a first object or of a point cloud boundary, at least one function is constant, discontinuous and non-zero on the face defined by the points, each first object being thereby meshed;

- the functions are unstructured multivariate splines;
- points of each respective point cloud discretizing a second object are not repeated;
- the splines have a same degree, the points of each respective point cloud discretizing a first object and the points belonging to each point cloud boundary being repeated with a multiplicity equal to said same degree plus one;

- the functions of the basis are functions of the type $f_I^k$, defined for each domain $D_k$, each degree $p = 1, ..., p_{max}$, and each set of indices $I$ corresponding to at least one couple $(I, B)$ in $IB_p$ by the formula

$$f_I^k(\mathrm{x}) = \sum_{(I,B)} \det((a_i, 1)_{i \in B}) \, M(x, I \cup B),$$

where the sum is over all the couple ($I$, $B$) in $IB_p$ sharing the same $I$ and that that lie in the same domain $D_k$, where $IB$ is a set of couples of indices ($I$, $B$) such that the parallelepipeds

$$\Pi_{I,B} = \sum_{i \in I}(a_i, 1) + \sum_{b \in B}[0, (a_b, 1)]$$

form a subdivision of the polytope

$$Z(V) = \sum_{i=1}^{n}[0, (a_i, 1)]$$

where all the sums are intended as Minkowski sums, $IB_p$ being the set of such indices that have exactly p elements in the set $I$, where M is a spline function defined recursively by the formula

$$M(x|(a_i)_{i \in X}) := \begin{cases} \dfrac{d!}{\det(X)} 1_X(x) & \text{if } k = 0, \\ \dfrac{k+d}{k}\sum_{b \in Y} \dfrac{\det \binom{x}{b}B}{\det(B)} M(x|(a_i)_{i \in B \setminus \{b\}}) & \text{otherwise} \end{cases}$$

where X is a set of k+d+1 indices of point, Y being a subset of X of size d+1 such that all the points $(a_i)_{i \in Y}$ are affinely independent, where if no such Y exists, the spline is zero everywhere, where A={$a_1$, ..., $a_n$} is the set of point cloud points, $d$ is the dimension, {$b$, ..., $b_n$} is the multiplicity of each point, {$D_1$, ..., $D_k$} is a set of domains, each delimited

by faces $F = \{f_1^k, ..., f_{n_k}^k\}$ defined with points in A, and $p_{max}$ is a desired polynomial order;

- the performing of the simulation run comprises performing a Galerkin discretization method based on the basis of functions;
- the Galerkin discretization method is a discontinuous Galerkin discretization method;
- the simulation is a simulation of a portion of the subsoil subject to hydrocarbon production and/or exploration and/or $CO_2$ storage, the model being a geomodel, the model comprising a first part to remain in shape during the simulation and a second part to undergo a deformation during the simulation;
- the simulation is a flow simulation, the portion of the subsoil including a reservoir in which fluid flows, and an underburden and an overburden, the fluid flow causing deformation of the underburden and/or the overburden;
- the simulation is a seismic simulation for hydrocarbon production and/or exploration and/or $CO_2$ storage, the model representing a domain of the subsoil, the model including a distribution of velocities and densities on the domain, the distribution of velocities undergoing deformation during the simulation to match seismic measurements;
- the simulation is a simulation of a mechanical part subject to a deformation caused by physical constraints, the model representing the mechanical part;
- the mechanical part includes a gasket subject to a deformation caused by physical constraints exerted by one or more other parts;
- the mechanical part includes a wind turbine or a mechanical part thereof, subject to vibrations or deformations caused by physical constraints exerted by a fluid;
- the mechanical part includes a battery with electrodes and electrolytes, the battery being subject to interactions between the electrolytes and ions; and/or
- the simulation is a simulation of a domain of the real world comprising a sub-domain to undergo a deformation during the simulation and a sub-domain to remain in shape, the model representing the domain.

It is further provided a computer program comprising instructions for performing the method.

It is further provided a computer readable data storage medium having recorded thereon the computer program.

It is further provided a computer comprising a processor coupled to a memory, the memory having recorded thereon the computer program.

**BRIEF DESCRIPTION OF THE DRAWINGS**

Non-limiting examples will now be described and in reference to the accompanying drawings, where:

- FIG.s 1 to 8 illustrate the method; and

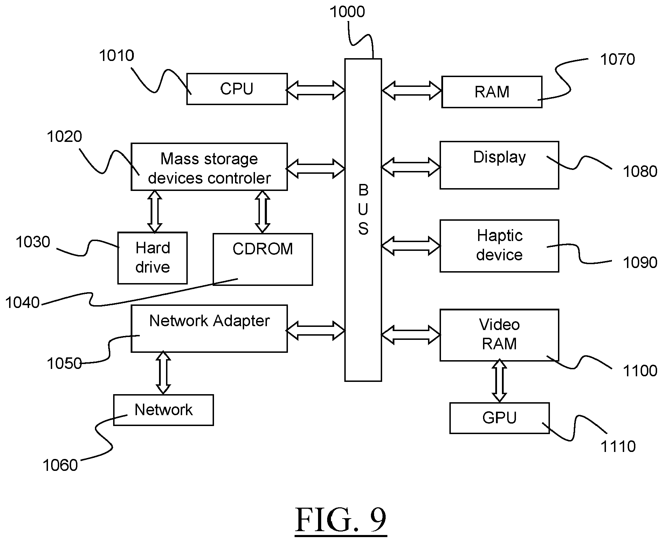

- FIG. 9 shows an example of the computer.

**DETAILED DESCRIPTION**

It is proposed a computer-implemented method for performing a deformation-based physics simulation. The physics simulation is described by a partial differential equation. The method comprises providing a geometrical model. The geometrical model represents a portion of the real world. The method further comprises performing a hybrid discretization of the model. The performing of the hybrid discretization comprises discretizing one or more first objects in the portion each with a mesh and one or more second objects in the portion each with a point cloud. The method further comprises one or more iterations. Each iteration comprises performing a simulation run. The performing of the simulation run is based on a discretization of the partial differential equation and on the hybrid discretization. The iteration further comprises assessing a deformation as a result of the simulation run. The deformation corresponds to a shape deformation of the one or more second objects. The iteration further comprises updating the hybrid discretization to model the deformation by moving points of a point cloud.

The method constitutes an improved method for performing a deformation-based physics simulation.

Notably, the method allows to perform a deformation-based physics simulation, for example a physics simulation involving significant deformations. The method does so notably by relying on a hybrid discretization of the geometrical model which represents the portion of the real world subject to the simulation. The hybrid discretization includes a first discretization of one or more first objects in the portion each with a mesh and a second discretization of one or more second objects in the portion each with a point cloud. Now, on the one hand, since a second object is discretized with a point cloud, any deformation resulting from a simulation run and that affects the second object can be modeled by moving points of the point cloud. In other words, deformations occurring during the simulations and corresponding to a shape deformation of a second object are modeled efficiently by moving points of the point cloud discretizing the second object. Notably, meshing of the second object, subject to a significant deformation, is avoided, thereby avoiding deformation of meshing elements which could cause stability and performance problems. On the other hand, a first object, not subject to a significant deformation, is discretised with a mesh. This allows to discretize accurately the first object, by means of a mesh that conforms accurately with the geometry and topology of the first object. In other words, the hybrid meshing enables to discretize objects subject to a significant deformation with a discrete geometrical representation suitable for efficiently model the deformation while objects not subject to a significant deformation are discretized with a discrete geometrical representation that accurately model their geometry and topology. Thereby, the significant deformations inherent to the deformation-based simulation are well modelized while avoiding mesh deformation which could cause stability and performance problems. Furthermore, the method, by using point clouds as a part of the hybrid discretization, avoids to perform explorative and expensive (in terms of computing resources), and uncertain, computations for choosing or updating a mesh adapted to the underlying physics problem. Rather, for both direct and inverse simulation problems, the method models physical systems subject to significant deformations with robustness and efficiency, with both a high numerical efficiency and a high geometric accuracy.

In other words, the method thus provides an approach for unifying meshing-based simulations and meshless methods, which allows to mix different numerical technics to model a system with a unknown or evolutive geometry without meshing degeneration issues while modeling any topology or geometry. The method makes it notably possible to mix meshed methods (*e.g.* Finite Element Meshing (FEM) or Discontinuous Galerkin) with meshless methods (*e.g.* splines) in a same unitary simulation, without any coupling. The point cloud points may be efficiently used, for example in inverse problems, to avoid meshing degenerations. The point cloud points also enable to create discontinuities/fractures naturally and without numerical degenerations.

The method can be applied to various deformation-based physics simulations in various industrial contexts. The deformation-based simulation can notably be a simulation where the geometrical model represents a domain of the real-world undergoing significant deformations, *i.e.* the model is to be deformed as the simulation is executed to model the deformations of the domain of the real-world. The deformation-based simulation can alternatively be a simulation of an object (*e.g.* a mechanical part) undergoing deformations due to physical constraints (*e.g.* caused by a human use). The method may more generally be applied to deformation-based physics simulation for:

- analysis of mechanical systems subject to significant deformations and/or tears and/or fractures, such as hyperelasticity problems in various contexts (such as gaskets simulations, tightness problems, high pressure problems), reservoir simulations, material simulations,

- inverse problems or optimal control problems, such as seismic inversion, $CO_2$ monitoring, shape optimization,
- multi-physics simulation, such as simulations coupling flow simulation and mechanical simulation (*e.g.* reservoir simulation or $CO_2$ injection), interactions between wind turbines and fluids, or ions transports in porous environments (*e.g.* in the context of modern battery).

The method can be used for performing deformation-based simulations of a portion of the subsoil subject to hydrocarbon production and/or exploration and/or CO2 storage. In other words, the deformation-based simulation of the method can be that of a portion of the subsoil subject to hydrocarbon production and/or exploration and/or CO2 storage. In such applications, the model can be a geomodel comprising a first part to remain in shape during the simulation and a second part to undergo a deformation during the simulation. In other words, the simulation can be that of a domain of the subsoil undergoing deformations. For example, the simulation can be a flow simulation, the portion of the subsoil modeled by the geomodel including a reservoir in which fluid (*e.g.* oil and/or gas, water, or $CO_2$) flows, and an underburden and an overburden, the fluid flow causing deformation of the underburden and/or the overburden. In such a case the simulation models the time evolution of the fluid flow and of the mechanical stresses exerted by the fluid flow and the method models the deformations of the underburden and/or the overburden over time.

The method can also be used for performing a seismic simulation for hydrocarbon production and/or exploration and/or $CO_2$ storage. In other words, the deformation-based simulation of the method can be a seismic simulation, upstream a hydrocarbon production and/or exploration and/or $CO_2$ storage process. In such a case, the model represents a domain of the subsoil including a distribution of velocities and densities on the domain. The distribution undergoes deformation during the simulation to match seismic measurements.

The method can also be used for performing a simulation of a mechanical part subject to a deformation caused by physical constraints. In other words, the deformation-based simulation of the method may be a simulation of a mechanical part subject to a deformation caused by physical constraints. In such a case the model represents the mechanical part. The mechanical part may be any mechanical part subject to significant deformations (*e.g.* during use). The mechanical part may for example include a gasket subject to a deformation caused by physical constraints exerted by one or more other parts. In another example, the mechanical part may include a wind turbine or a mechanical part thereof, subject to vibrations or deformations caused by physical constraints exerted by a fluid. In yet another example the mechanical part may include a battery with electrodes and electrolytes, the battery being subject to interactions between the electrolytes and ions.

The method is for performing a deformation-based physics simulation.

A physics simulation is herein a computer-implemented numerical method for simulating a physical phenomenon or system of the real world, for industrial purposes. The simulation discretizes the physical phenomenon or system to obtain objective results about the system or phenomenon. The simulation thus solves a physical problem involving the physical phenomenon or system by discretizing it. Any simulation herein may solve a direct physical problem, *i.e.* the simulation predicts a final state of a physical system or phenomenon based on the knowledge of its initial state and on a time-discretization of the physics involved. Any simulation herein may alternatively solve an inverse problem, *i.e.* the simulation finds (*e.g.* by means of an optimization) parameters of a physical system or phenomenon based on observations related to the a physical system or phenomenon. The simulation may for example be for optimal control, *i.e.* the simulation determines a parameter of a physical system or phenomenon with the purpose of optimizing a physical performance. Any simulation herein is described by a partial differential equation, which captures the physics (*i.e.* the physics laws) of the system or phenomenon to simulate. In the context of the present disclosure, a system of partial differential equations, an ordinary differential equation and a system of ordinary differential equations are also referred to as partial differential equations. In other words, the partial differential equation involved in the method may be any type of partial differential equation, including an ordinary differential equation, a system of ordinary differential equations, or a system of partial differential equations.

The simulation of the method is a deformation-based simulation. This means that the simulation involves one or more deformations, which correspond to real-world physical shape deformations. Any deformation herein can be a deformation of the physical portion of the real-world involved in the method, such as a material or a portion of the earth. This means that the simulation involves deformations of the geometrical model representing the portion, which model the deformations of the physical portion in the real-world. In other words, the deformation directly models a shape deformation of a physical portion of the real-world. Alternatively, the deformation may indirectly correspond to a shape deformation of a physical portion of the real-world, *i.e.* may indirectly model or relate to a shape deformation of a physical portion of the real-world. For example, the deformation may be that of a distribution of parameters modeling the distribution of the same parameters in the real world. The deformation of the distribution may translate/capture a deformation of a physical portion of the real-world, such that, for example, such a deformation may result in a subsequent adaptation/modification of the geometrical model to match the deformed distribution of parameters.

The method comprises providing a geometrical model representing a portion of the real-world.

The geometrical model is a model of the geometry of the portion of the real-world, the portion of the real-world being involved in the physics simulation. The portion of the real-world may for example be a portion of the earth. The portion of the real-world may for example be a real-world industrial object such as a mechanical part. The geometrical model models the portion of the real world. The geometrical model comprises data about the geometry of the portion of the real-world, such as data about geometrical structures within the portion and delimitations between the geometrical structures (*e.g.* geological structures of the subsoil such as geological layers and delimitations thereof such as geological horizons in case of a geomodel), materials within the portions (*e.g.* materials constitutive of geological horizons in case of a geomodel) and/or physical parameters related to the geometry the portion (*e.g.* densities of materials in case of a geomodel).

The providing of the geometrical model may comprise creating the geometrical model, *e.g.* based on knowledge about the portion of the real-world and/or on physical measurements about the portion of the real-world. The creation of the model may comprise performing physical measurements, *e.g.* with sensors, on the portion of the real-world, and, based on these measurements, and optionally on knowledge about the portion, defining geometries altogether forming the geometrical model. The geometries correspond to real-world geometries, *e.g.* as measured by the sensors. The providing of the geometrical model may alternatively comprise retrieving a geometrical model which has been created beforehand. For example, the providing of the geometrical model may comprise accessing a (*e.g.* distant) database on which the model has been stored subsequent to its creation, and for example download the geometrical model.

The method further comprises performing a hybrid discretization of the model. The hybrid discretization is a discretization of the model which comprises a mesh discretization and a point cloud discretization. In other words, the geometrical model is discretized with both a mesh and a point cloud. The portion comprises one or more first objects, and the performing of the hybrid discretization comprises discretizing each first object with a mesh, *i.e.* discretizing a geometrical representation of the first object in the geometrical model with a mesh. Each mesh discretizes only one first object, *i.e.* there is no mesh element connecting different objects. The portion also comprises one or more second objects, and the performing of the hybrid discretization comprises discretizing each second object with a point cloud, *i.e.* discretizing a geometrical representation of the second object in the geometrical model with a point cloud. An object within the portion is a physical entity, or a part thereof, of the portion. The object may be a part of the portion, such as a subpart/component part of a mechanical part or a part of a real-world domain (*e.g.* a geometrical layer or a part thereof in a geomodel). The object may alternatively be a physical entity which moves within the portion (e.g. a fluid, a group of particles).

Each second object is an object to undergo a significant deformation during the simulation, *i.e.* during the simulation, a simulation run yields a result corresponding to a shape deformation of a second object. In other words, the second object is a physical entity which undergoes one or several significant deformations during the physics phenomenon which the method simulates. Each first object is an object to remain shape during the simulation, *i.e.* during the simulation, the results yielded by the simulation run do not significantly (*e.g.* at all) correspond to a change of shape of the first object. In other words, the first object is a physical entity of which is preserved or tends to be essentially preserved during the simulation.

The performing of the hybrid discretization of the model may comprise discretizing each object in the portion, each with a respective point cloud. In other words, as a prior step towards the discretization of the first object(s) by means of a mesh and of the second object(s) by means of a point cloud, the method discretizes each object, first or second, with a respective point cloud. This prior discretization may be carried out as known in the art, *e.g.* by determining the positioning of the points of each respective point cloud by any known point cloud discretization method suitable for the simulation at hand. The determining of the positioning of the points may be carried out manually by a user, *i.e.* by graphical user interaction (*e.g.* by clicking or touching the screen to position the points), or, alternatively, by any method for automatically discretizing the geometrical model with point clouds each discretizing a first or second object.

The performing of the hybrid discretization of the model may then comprise, further to the discretizing of each object with a respective point cloud, providing a basis of interpolating piecewise polynomial functions. "Basis" refers to a basis in the meaning of linear algebra, that is a set of vectors linearly independent and spanning a vector space. The basis is made of piecewise polynomial functions, *i.e.* each function is a piecewise function which is a polynomial function on a face defined by the intersection of cells defined by subsets of point cloud points (for example, in two dimensions, the intersection between two triangle faces each defined by three point cloud points). The function may be zero elsewhere. The functions may be linearly combined into linearly independent piecewise polynomial functions which are each a polynomial function on each face defined by a subset of points of a respective point cloud. Moreover, the basis is such that, for each subset of points of a point cloud discretizing a first object or of a point cloud boundary, at least one function (*i.e.* each function of one or more functions) is discontinuous and non-zero on the face defined by the points. For example, the function may be of the indicator function type (*e.g.* may be an indicator function of a face) or may have a non-zero value on the boundary and then become discontinuous outside the boundary. Other functions may equal zero on the face. In other words, the basis may be such that any previously-discussed linear combination of basis functions is a piecewise polynomial function, which is a polynomial function on a set of cells defined as intersections of simplices (*e.g.* triangles or tetrahedra) built with subsets of points of a respective point cloud, and which, for each subset of points of a point cloud discretizing a first object or of a point cloud boundary, is discontinuous and not identically zero on the face defined by the points. On the one hand, this discontinuity and non-zero value on each face of a point cloud discretizing a first object or on each piece of point cloud boundary results in that each point cloud discretising a first object is meshed by these faces and in that boundary or flux conditions (as known *per se* from the field of numerical analysis) may be imposed on boundaries between these faces and on point cloud boundaries. On the other hand, the piecewise polynomial aspect of the function (*i.e.* the linear combination of the basis functions) on the rest of the domain, *i.e.* over points discretizing second objects, results in that these point clouds remain point clouds, *i.e.* are not meshed. In other words, the providing of the basis of interpolating piecewise polynomial functions amounts to meshing each first object with a mesh and each second object with a point cloud.

The functions may be unstructured multivariate splines. The concept of splines is known *per se.* The unstructured multivariate splines are multivariate splines, *i.e.* multi-dimensional splines, which are not defined using a tensor product, as opposed to known structured multivariate splines. This allows an improved flexibility when using the splines for defining the meshed parts of the geometrical model, notably by providing an improved flexibility for defining repeating points, as discussed hereinafter. Notably, mandatory repetition of points along an axis, which is inherent to structured multivariate splines based on a tensor product, is avoided.

The providing of the basis may comprise repeating points of point clouds meshing the objects. Specifically, for some objects, for example for each first object, the discretizing of the object with a respective point cloud may comprise repeating points, i.e. creating several instances of a same point. Repeating points allows to control regularity of basis functions at desired portions of the point clouds. Indeed, by construction of the functions, because of their properties, repeating a point causes a loss of regularity of basis functions which are non-zero at this point, which ultimately causes a local loss of regularity of the functions. In other words, repeating a point constrains functions at this point in such a way that the only possibility of maintaining its recurrence properties is by reducing regularity of basis functions which are non-zero at this point. In yet other words, repeating a point modifies at least some functions of the basis by reducing their regularity. The creation of the basis may first comprise the creation of the basis based on (*i.e.* adapted for) the point clouds with no repeated points, then repeating points, and then modifying functions of the basis to account for repeated points.

The points of each respective point cloud discretizing a second object are not repeated. Thereby, the functions of the basis are regular at these points and in their neighbourhoods. This allows to manipulate these points, *i.e.* to move them, to modify the discretization of the second object as a result of a simulation run. In other words, when a simulation run results in a deformation corresponding to a shape deformation of a second object, these non-repeated points can be moved to model the deformation. Other points may be repeated, for example to create discontinuities for some basis functions, *e.g.* for setting boundary conditions or flux conditions. The points of each respective point cloud discretizing a first object and the points belonging to each point cloud boundary may be repeated. The splines having a same degree, these points are repeated with a multiplicity equal to said same degree plus one. This allows to modify functions of the basis by creating discontinuities which are such that, ultimately, where for each subset of points of a point cloud discretizing a first object or of a point cloud boundary, at least one function is constant, discontinuous and non-zero on the face defined by the points, the other functions being zero on the face. As explained above, this allows to mesh each first object.

An example of the basis and of its definition is now discussed. In this example, the basis function are multivariate splines. Let:

- $A=\{a_1, ..., a_n\}$ be a set of n points (*i.e.* the point cloud points in case of the method) in $d$ dimensions (*e.g.* d=2 or 3 in the case of the method), let $\{b, ..., b_n\}$ be the multiplicity of each point;

- Let $\{D_1, ..., D_k\}$ be a set of domains, each delimited by faces $F = \left\{ f_1^k, ..., f_{n_k}^k \right\}$ built/defined with points in A;
- Let $p_{max}$ be the desired polynomial order (also referred to as "degree");
- Let $\{E = e_1, ..., e_m\}$ be a set of additional faces describing internal boundaries, built with points in A.

The functions of the basis are in this example the functions $f_I^k$, defined for each domain $D_k$, each degree $p = 1, ..., p_{max}$, and each set of indices $I$ corresponding to at least one couple $(I, B)$ in $IB_p$ by the formula

$$f_I^k(x) = \sum_{(I,B)} \det((a_i, 1)_{i \in B}) \, M(x, I \cup B),$$

where the sum is over all the couple $(I, B)$ in $IB_p$ sharing the same $I$ and that that lie in the same domain $D_k$, where $IB$ is a set of couples of indices $(I, B)$ such that the parallelepipeds:

$$\Pi_{I,B} = \sum_{i \in I} (a_i, 1) + \sum_{b \in B} [0, (a_b, 1)]$$

form a subdivision of the polytope

$$Z(V) = \sum_{i=1}^{n} [0, (a_i, 1)]$$

where all the sums are intended as Minkowski sums, $IB_p$ being the set of such indices that have exactly p elements in the set I. M is a spline function defined recursively via the formula:

$$M(x|(a_i)_{i \in X}) := \begin{cases} \dfrac{d!}{\det(X)} 1_X(x) & \text{if } k = 0, \\ \dfrac{k+d}{k} \sum_{b \in Y} \dfrac{\det\binom{x}{b}B}{\det(B)} M\big(x|(a_i)_{i \in B \setminus \{b\}}\big) & \text{otherwise} \end{cases}$$

where X is a set of k+d+1 indices of points, and Y is a subset of X of size d+1 such that all the points $(a_i)_{i \in Y}$ are affinely independent. If no such Y exists, the spline is zero everywhere. For each domain $D_k$, the functions $f_I^k$ are supported only on couples $(I, B)$ in $D_k$ and are the basis functions used for the method.

The providing of the basis of functions may comprise constructing the basis, which may be carried out by any suitable construction method. In the case of the previously-discussed example, the construction may comprise performing the following algorithm:

**Input**

- Let A={$a_1$, ..., $a_n$} be the previously-discussed set of n points in $d$ dimensions, let {$b$, ..., $b_n$} be the multiplicity of each point;
- Let {$D_1$, ..., $D_k$} be the previously-discussed set of domains, each delimited by faces $F = \{f_1^k, ..., f_{n_k}^k\}$ built with points in A;
- Let $p_{max}$ be the desired polynomial order;
- Let {$E = e_1$, ..., $e_m$} be the previously-discussed set of additional faces describing internal boundaries, built with points in A.
- **Output:** the set of basis functions of order p;

**Algorithm - « Build function space »**

1. Build a weighted Delaunay triangulation, constrained on all the faces E and F, of the points in A.
2. Let the set $IB_0$ contain couple $(I, B) = (S, \emptyset)$ for each simplex $S = \{a_{i_1}, ..., a_{i_{d+1}}\}$ in the triangulation;
3. Create a multiset (i.e., a set that can contain repetitions) $Q_1 = \{\{a_1\}, ..., \{a_n\}\}$ ;
4. For each degree $p = 1, ..., p_{max}$ up to the maximum order:

    1. For each multiset $Q$ contained in $Q_p$:

        1. Take the union of the simplices $B$ for all the couples $(I, B)$ in $IB_0$ such that $B$ intersects $Q$;
        2. Remove from this region the set of simplices $B$ for all the couples $(I, B)$ in $IB_r$ with $0 < r < p$ such that their set *I* is contained in *Q* and *B* does not intersect *Q;*

3. Add as constraints the edges that are in the E or F families

4. Add as constraints the points whose multiplicity $b_i$ is higher than the number of times that they appear in *Q;*

5. Triangulate the corresponding region with a weighted Delaunay triangulation using the same weights as before;

6. For each simplex *S,* add the couple (*I, B*) = (*S, Q*) to the set *IB*$_p$

7. For each point *c* in set *S,* add the set $Q \cup \{c\}$ to the multiset $Q_{p+1};$

5. For each different *I* corresponding to at least a couple (*I, B*) in *IB*$_p$ compute the function

$$f_I^k(\mathrm{x}) = \sum_{(I,B)} \det((a_i, 1)_{i \in B})\, M(x, I \cup B)$$

summed over all the couple (*I, B*) in *IB*$_p$ sharing the same *I* and that that lie in the same domain $D_k$. M is the spline function defined recursively via the formula

$$M(x|(a_i)_{i\in X}) := \begin{cases} \dfrac{d!}{\det(X)}\, 1_X(x) & \text{if } k = 0, \\ \dfrac{k+d}{k} \displaystyle\sum_{b\in Y} \dfrac{\det\binom{x}{b}B}{\det(B)} M\big(x|(a_i)_{i\in B\setminus\{b\}}\big) & \text{otherwise} \end{cases}$$

where X is a set of k+d+1 indices of points and Y is a subset of X of size d+1 such that all the points $(a_i)_{i\in Y}$ are affinely independent. If no such Y exists, the spline is zero everywhere. Then for each domain $D_k$, the functions

$f_I^k$ are supported only on couple (*I, B*) in $D_k$ and are the basis functions used for the method.

In any case, the hybrid discretization results in a combination of meshed and non-meshed objects in the geometrical model, having boundaries which coincide perfectly.

Further to the performing of the hybrid discretization, the method then performs the simulation based on the hybrid discretization and on a discretization of the partial differential equation. The performing of the hybrid discretization comprises one or more iterations. Each iteration corresponds to a simulation run.

Each iteration comprises the performing of a simulation run based on the discretization of the partial differential equation and on the hybrid discretization. As known per se from the field of numerical simulations, performing a physics simulation described by a partial differential equation includes, based on a discretization in time and/or in space of the partial differential equation and on a discretization in space of the geometrical representation of the portion of the real-world to simulate, applying a suitable numerical method to simulate the partial differential equation (*e.g.* for finding a final time state or for solving an inverse problem, as previously discussed). The method implements this general simulation flowchart: based on the hybrid discretization previously performed in the method and on a discretization of the partial differential equation, the performing of the simulation run comprises applying a suitable numerical method to simulate the portion of the real-world (*e.g.* forfinding a final time state or for solving an inverse problem, as previously discussed). The performing of the simulation run lasts until a predefined time length has elapsed and/or until a predefined number of iterations has been reached and/or until the numerical method yields a result of the simulation run, as known *per se* from the field of numerical simulations. In other words, the simulation run corresponds to an execution of a numerical method simulating the partial differential equation based on the hybrid discretization until a predefined time length has elapsed and/or until a predefined number of iterations has been reached and/or until the numerical method yields a result of the simulation run. For each iteration, the performing of the simulation run may be preceded by a step of performing the discretization of the partial differential equation (for example, finding the matrix of a suitable Galerkin discretization method), by any suitable method, which may comprise determining boundary conditions for the simulation. The performing of the discretization of the partial differential equation may consist in performing the discretization from scratch (*e.g.* at the first iteration) or in updating a previous discretization (*e.g.* at a subsequent iteration, further to and based on a previous iteration).

The performing of the simulation run may be based on any numerical method. The simulation run may be preceded by a step of performing a discretization of the partial differential equation adapted to this numerical method. The performing of the simulation run may for example comprise performing a Galerkin discretization method based on the basis of functions. In other words, the basis of function may be the basis used in the Galerkin discretization method, as known *per se* from Galerkin methods. As known *per se,* the Galerkin discretization method discretizes a weak formulation of the partial differential equation into a linear system of equations, which, using the basis, can be written in matrix form. The performing of the simulation run may comprise computing the Galerkin matrix (also referred to as the matrix of the Galerkin formulation, equation or discretization) and defining boundary and/or flux conditions for the Galerkin method, as known *per se* from Galerkin methods. At a next iteration, the performing of the simulation may likewise comprise updating the Galerkin matrix based on the result of the previous simulation run and/or on the updated hybrid discretization. The Galerkin discretization method may be a discontinuous Galerkin discretization method, such as any suitable discontinuous Galerkin discretization method. For example, The Galerkin discretization method may be the known IPDG Galerkin discretization method.

This Galerkin discretization where the Galerkin basis of functions is the basis of multivariate unstructured splines yields an hybrid unstructured multi-patch system, both meshed and non-meshed, with basis functions having variable regularities and able to represent any topology. This allows to simulate multi-physics systems with complex geometries such as gaskets and bearing/rolling systems (*e.g.* solid materials combined with elastomers, fluids under pressure), subsoil models for seismic modeling/simulation (*e.g.* sediments, water and rock/mineral salt modeling), reservoir simulations (*i.e.* fluids with a solid matrix), wind turbine simulations (*i.e.* effects of the air on wind turbines), or ions in a porous medium. Physical entities are discretized with a mesh while others are non (*i.e.* they are discretized with a point cloud). This also allows to use real points positions (*e.g.* seismic measurements for a seismic simulation) as a control parameter/command in a optimal control simulation, for example for an inverse problem (*e.g.* seismic simulation, for determining a model with a distribution of velocities based on seismic measurements, or shape optimisation of a mechanical part) while avoiding problems of degeneration of mesh elements and without constraints on the topology and geometry of the object under simulation, or on the number of patches. Indeed, discontinuities (fractures, tears or patches subdivision) are automatically created during the optimization as points positions become coplanar/colinear, or more generally affinely dependent. Various physics simulation may thus be performed by the method, including wave physics, fluid flows (*e.g.* Darcy or Navier-Stokes equations), elasticity (linear or non-linear), electromagnetism (*e.g.* ions transport), for various applications, including seismic, $CO_2$ monitoring, reservoir simulation, $CO_2$ injection/storing, hyperelasticity, structural mechanism of wind turbines, and ions transport in batteries.

Then, further to the performing of the simulation run (*i.e.* once the simulation run is completed) the method comprises assessing a deformation as a result of the simulation run, *i.e.* determining a deformation based on a result yielded by the simulation run. Specifically, the simulation run yields an objective physical result about the system or phenomenon being simulated, the result capturing a deformation. For example, the result may be a physical parameter (*e.g.* a stress) which has a value characteristic of a deformation or a distribution of values (*e.g.* resulting from an optimization) indicating a deformation. The determining of the deformation consists in determining the deformation based on this result, *e.g.* based on a physics analysis and/or by performing computations yielding directly the deformation or information thereof from the result.

The deformation corresponds to a shape deformation of the one or more second objects. In other words, the deformation, as yielded by the result of the simulation run, translates/captures a shape deformation of the one or more second objects, *e.g.* of one or more of them. The deformation may directly be a change in shape, *i.e.* a second object as discretized in the geometrical model is to change in shape (*i.e.* to undergo a deformation) directly as a result of the simulation run. The deformation may alternatively be a deformation in a distribution of values (*e.g.* as a result of an optimization), reflecting a change in shape of a second object which is to be accounted for on the model. In other words, either the simulation run directly yields a physical deformation of the geometry of a second object, or the simulation run results in a deformation of a distribution of values, and from which a change in the geometry of the model is to be inferred. In such a case, the method may comprise such an inference.

The iteration then comprises updating the hybrid discretization to model the deformation by moving points of a point cloud, *i.e.* discretizing a second object for which a deformation was determined. The moving of the points may be carried out automatically (*e.g.* for minimizing a suitable cost function, *e.g.* by following its gradient). The movement of the points updates the hybrid discretization since it changes the discretization of the second object(s). Where the basis of interpolating piecewise polynomial functions is used for performing the hybrid discretization, the moving of the points affects the functions, as they are interpolating functions. For example, the moving of the points can result in that some points are repeated. As previously discussed, this creates a discontinuity for some of the functions, and if points are repeated with a multiplicity equal to the degree of the functions plus one, this may even result in that a part of a point cloud discretizing a second object can be meshed, at least partially. In any case, the updated hybrid discretization forms a discretization of the geometrical model which models a deformation caused by a simulation run, thereby modeling deformations of the deformation-based simulation.

The method may then perform a next iteration (*i.e.* unless one iteration is sufficient to perform the physics simulation and to obtain satisfying and/or significant results), which comprises a next performing of the simulation run, a next assessing of a deformation as a result of the simulation run, and a next update of the hybrid discretization to model the deformation. The performing of the simulation may in such a case be preceded by a step of updating the discretization of the partial differential equation to account for the update of the hybrid discretization and/or the results of the previous simulation run. The update may further comprise an update of boundary conditions or flux conditions. The performing of the simulation run may thus be based on the updated hybrid discretization and the updated discretization of the partial differential equation (for example an updated Galerkin discretization matrix).

The method may comprise displaying results of the simulation, *e.g.* at the end of the simulation or along with the simulation. For example, the method may display the hybrid discretization during the simulation, the modifications of the discretization which result from the simulation runs for modeling the deformations being displayed (*e.g.* in real time) along with the simulation. The method may alternatively or additionally comprise performing one or more physical actions in the real world based on the outcome of the simulation performed by the method.

Applications of the method are now discussed.

A first application of the method is the simulation of a domain of the real-world (*i.e.* a physical domain) subject to deformations. In other words, in this application, the simulation is a simulation of the domain, the geometrical model represents geometrically the domain, and the domain comprises a sub-domain to undergo a deformation during the simulation (*e.g.* a significant deformation) and a sub-domain to remain in shape (*i.e.* to essentially maintain its shape, *e.g.* save for minor deformations).

In this first application, the method may comprise:

- providing the geometrical model representing the domain of the real world;
- performing the hybrid discretization of the model, comprising discretizing one or more first sub-domain in the domain each with a mesh and one or more second sub-domain in the domain each with a point cloud, each first sub-domain being a sub-domain to remain in shape during the simulation, each second sub-domain being a sub-domain to undergo a deformation during the simulation;
- one or more iterations of:

  ○ performing a simulation run based on a discretization of the partial differential equation and on the hybrid discretization;
  ○ assessing a deformation as a result of the simulation run, the deformation corresponding to a shape deformation of the one or more second sub-domains (*i.e.* of at least one of them); and
  ○ updating the hybrid discretization to model the deformation by moving points of a point cloud discretizing a second sub-domain.

In an example of this first application, the simulation is a simulation of a portion of the subsoil subject to hydrocarbon production and/or exploration and/or CO2 storage, the model being a geomodel, the model comprising a first part to remain in shape during the simulation and a second part to undergo a deformation during the simulation. The portion of the subsoil is a domain of the real-world, the first part forming a first sub-domain and the second part forming a second sub-domain.

For example, the simulation may be a flow simulation. As known *per se* from geosciences, a flow simulation is a simulation of fluid flow and dynamics in the subsoil. In the present case, the flow simulation is for hydrocarbon production and/or exploration and/or $CO_2$ storage, *i.e.* the fluid comprises or consists in oil, gas, water and/or $CO_2$. In this example, the portion of the subsoil may include a reservoir (*i.e.* a reservoir for $CO_2$ storage or an oil and/or gas reservoir) in which fluid flows, an underburden (*i.e.* a portion of the subsoil under the reservoir) and an overburden (*i.e.* a portion of the subsoil over the reservoir). In the flow simulation, the fluid flow causes deformation of the underburden and/or the overburden.

In this example of the flow simulation, the method may comprise:

- providing the geometrical model representing the portion of the subsoil, the geometrical model being a geomodel modeling a reservoir of the subsoil located between an underburden (*i.e.* a portion of the subsoil under the reservoir) and an overburden (*i.e.* a portion of the subsoil over the reservoir), the reservoir including a fluid such as water, $CO_2$, or oil and/or gas;
- performing the hybrid discretization of the model, comprising, discretizing the reservoir with a mesh, and discretizing the underburden and the overburden each with a point cloud, by:

  ○ discretizing the reservoir, the underburden and the overburden each with a respective point cloud;
  ○ providing the basis of multivariate splines, where the splines have a same degree, where the points of the respective point cloud discretizing the reservoir are repeated a number of times equal to said same degree plus one, and where the points of the respective point clouds discretizing the underburden and the overburden are not repeated;

- one or more iterations of:

  ◦ discretizing the partial differential equation, the partial differential equation modeling the propagation and dynamics in time of the fluid in the subsoil, with a discontinuous Galerkin method (for example IPDG Galerkin) of which basis is the basis of multivariate splines, including:

     ▪ defining boundary conditions and/or flux conditions of the Galerkin method; and
     ▪ forming the Galerkin matrix;

  or updating the discretization of the partial differential equation based on the result of a previous iteration, including:

     ▪ updating boundary conditions and/or flux conditions of the Galerkin method; and/or
     ▪ updating the Galerkin matrix;

  ◦ performing a simulation run based on the discretization of the partial differential equation and on the hybrid discretization;
  ◦ assessing a deformation as a result of the simulation run, the deformation being a shape deformation of the underburden and/or the overburden, the assessing of the deformation comprising:

     ▪ determining a mechanical stress on the underburden and/or the overburden based on the fluid displacement that results from the simulation run (*i.e.* the result of the simulation run includes a fluid displacement);
     ▪ determining a change in shape of the underburden and/or the overburden based on the determined mechanical stress;

  ◦ updating the hybrid discretization to model the deformation by moving points of the point cloud discretizing the underburden and/or points of the point cloud discretizing the overburden, the updating thereby modeling a change in shape of the underburden and/or the overburden, where the change in shape can cause a change in the fluid displacement at the next iteration (if any).

The above-discussed flow simulation may be for modeling water or oil and/or gas flow in a reservoir for hydrocarbon production and/or exploration, in which case the method may be included in a hydrocarbon production and/or exploration process including:

- optionally, designing the geomodel, as known *per se* from geosciences;
- performing the flow simulation according to the method; and
- performing one or more physical actions based on the result of the performing of the flow simulation (*e.g.* simulation data about fluid displacement or underburden and/or overburden deformation), such as fracking, drilling one or more wells, extracting oil and/or gas, or injecting water.

The above-discussed flow simulation may alternatively or additionally be for modeling $CO_2$ flow in a reservoir for $CO_2$ storage, in which case the method may be included in a $CO_2$ storage process including:

- optionally, designing the geomodel, as known *per se* from geosciences;
- performing the flow simulation according to the method; and
- performing one or more physical actions based on the result of the performing of the flow simulation (*e.g.* simulation data about fluid displacement or underburden and/or overburden deformation), such as storing $CO_2$ in the subsoil.

In a second application, the method is for performing a seismic simulation, for hydrocarbon production and/or exploration and/or $CO_2$ storage. The simulation is thus a seismic simulation. As known *per se* from geosciences, a seismic simulation is a simulation that solves the inverse problem of determining the geology of the subsoil (*i.e.* the relative positions and the type of geological layers, and the positions of geological horizons) based on seismic measurements. Specifically, the seismic simulation uses a geometrical model representing a domain of the subsoil, including a distribution of velocities and densities on the domain, and iteratively modifies this distribution until it matches seismic measurements about the subsoil. In other words, during the simulation, the distribution undergoes deformation(s) to match seismic measurements. The positions and the type of geometrical layers, and the positions of the geological horizons can then be deduced from the distribution of velocities and densities, as known *per se* from geosciences. Thereby, a deformation of the distribution corresponds to a modification (*e.g.* to perform during the simulation or after) of the model, to update the model so that it matches reality.

In this second application, the method may comprise:

- providing the geometrical model representing a domain of the subsoil, the geometrical model including a distribution of velocities and densities on the domain. The providing of the geometrical model may include providing the distribution, *e.g.* by inferring it from prior knowledge about the subsoil. Alternatively, the model may be provided already with a distribution. In any case, the distribution needs to be updated, through the simulation, to match (*e.g.* recent and/or up-to-date) seismic measurements;
- performing the hybrid discretization of the model, comprising, discretizing one or more first geometric portions of the model each with a mesh and one or more second geometric portions of the model each with a point cloud, each second geometric portion being likely (*e.g.* based on prior knowledge) to undergo deformation during the simulation to match seismic measurements and each first geometric portion being likely (*e.g.* based on prior knowledge) to remain shape during the simulation, by:

  ◦ discretizing the first and second portion(s) each with a respective point cloud;
  ◦ providing the basis of multivariate splines, where the splines have a same degree, where the points of each respective point cloud discretizing a first portion are repeated a number of times equal to said same degree plus one, and where the points of each respective point clouds discretizing a second portion are not repeated;

- one or more iterations of:

  ◦ discretizing the partial differential equation, the partial differential equation modeling the distribution of velocities and densities in the subsoil with the constraint that the distribution must match the seismic measurements, with a discontinuous Galerkin method (for example IPDG Galerkin) of which basis is the basis of multivariate splines, including:

    ▪ defining boundary conditions and/or flux conditions of the Galerkin method; and
    ▪ forming the Galerkin matrix;

  or updating the discretization of the partial differential equation based on the result of a previous iteration, including:

    ▪ updating boundary conditions and/or flux conditions of the Galerkin method; and/or
    ▪ updating the Galerkin matrix;

  ◦ performing a simulation run based on the discretization of the partial differential equation and on the hybrid discretization;
  ◦ assessing a deformation as a result of the simulation run, the deformation being a deformation of the distribution, the assessing of the deformation comprising:

    ▪ determining velocities and/or densities which are modified as a result of the simulation run; and
    ▪ determining point cloud points which are to be moved for retro-propagating the modification of the velocities and/or densities on the model, an alignment of points corresponding to a geological horizon or a portion thereof;

  ◦ updating the hybrid discretization to model the deformation by moving the points of the point cloud which are to be moved, thereby updating the model to match the seismic measurements.

The method can thus efficiently perform a seismic simulation with a Full-waveform inversion (FWI) approach where each subsoil domain (*e.g.* salt, water, sediments) is represented by a patch, meshed or not, and where the reflection interfaces are automatically reconstructed during the inversion when the points become coplanar. In the retro-propagation, the interfaces can be accurately positioned as meshing is not required in some portions of the model, which allows to avoid numerical stability issues caused by to small meshes.

The above-discussed seismic simulation may be for hydrocarbon production and/or exploration, in which case the method may be included in a hydrocarbon production and/or exploration process including:

- providing the seismic measurements, for example by acquiring the seismic measurements by performing a seismic acquisition campaign;
- performing the seismic simulation according to the method in order to update a model of the subsoil to match the seismic measurements; and
- optionally, performing one or several simulations on the updated model, for example one or several flow simulations, for example according to the method as previously discussed;
- performing one or more physical actions based on the updated model and/or on the simulation(s) performed on the updated model, such as fracking, drilling one or more wells, extracting hydrocarbon, or injecting water.

The above-discussed seismic simulation may alternatively or additionally be for $CO_2$ storage and/or monitoring, in which case the method may be included in a $CO_2$ storage and/or monitoring process including:

- providing the seismic measurements, for example by acquiring the seismic measurements by performing a seismic acquisition campaign;
- performing the seismic simulation according to the method in order to update a model of the subsoil to match the seismic measurements;
- optionally, performing one or several simulations on the updated model, for example one or several flow simulations, for example according to the method as previously discussed; and
- determining CO2 location and/or layers in the subsoil based on the updated model and/or performing one or more physical actions based on the updated model and/or on the simulation(s) performed on the updated model, such as storing $CO_2$ in the subsoil.

In a third application, the method is for performing a simulation of a mechanical part subject to a deformation caused by physical constraints. In other words, the geometrical model represents the mechanical part and the simulation is a simulation of a mechanical part subject to a deformation caused by physical constraints.

In this third application, the method may comprise:

- providing the geometrical model representing the mechanical part, the mechanical part including a first part to remain shape and a second part to undergo a deformation;
- performing the hybrid discretization of the model, comprising, discretizing the first part with a mesh and the second part with a point cloud, by:

　　◦ discretizing the first and second parts each with a respective point cloud;
　　◦ providing the basis of multivariate splines, where the splines have a same degree, where the points of the respective point cloud discretizing the first part are repeated a number of times equal to said same degree plus one, and where the points of the respective point cloud discretizing the second part are not repeated;

- one or more iterations of:

　　◦ discretizing the partial differential equation, the partial differential equation modeling the time evolution of the shape of the mechanical part subject to physical constraints, with a discontinuous Galerkin method (for example IPDG Galerkin) of which basis is the basis of multivariate splines, including:

　　　　▪ defining boundary conditions and/or flux conditions of the Galerkin method; and
　　　　▪ forming the Galerkin matrix;

　　or updating the discretization of the partial differential equation based on the result of a previous iteration, including:

　　　　▪ updating boundary conditions and/or flux conditions of the Galerkin method; and/or
　　　　▪ updating the Galerkin matrix;

　　◦ performing a simulation run based on the discretization of the partial differential equation and on the hybrid discretization;
　　◦ assessing a deformation as a result of the simulation run, the deformation being a deformation of the shape of the second part caused by physical constraints, the assessing of the deformation comprising:

　　　　▪ determining a mechanical stress exerted on the second part due to the physical constraints; and

■ determining a shape deformation of the second part based on the mechanical stress;

∘ updating the hybrid discretization to model the deformation by moving points of the point cloud discretizing the second part, thereby updating the discretization of the shape of the part to model the deformation.

The method thereby allows to determine the shape of a mechanical part subject to significant deformations (*e.g.* a gasket or a wind turbine, as discussed hereinbelow). This allows for example to optimize the shape of the mechanical part in response to the deformation. For example, the constraints may be parameters of the partial differential equation so that during the simulation, the shape of the mechanical part will be optimized with respect to the constraints by simulating the partial differential equation (*i.e.* the method solves an optimization problem). It is to be noted that the method does not need or require a CAO/CAD model, often unavailable.

For example, the mechanical part includes a gasket subject to a deformation caused by physical constraints exerted by one or more other parts. In this case, the method may comprise:

- providing the geometrical model representing the mechanical part, the mechanical part including the gasket and one or more the other parts to remain in shape during the simulation;
- performing the hybrid discretization of the model, comprising, discretizing the gasket with a point cloud and each other part each with a respective mesh, by:

  ∘ discretizing the gasket and each other part each with a respective point cloud;
  ∘ providing the basis of multivariate splines, where the splines have a same degree, where the points of each respective point cloud discretizing each other part are repeated a number of times equal to said same degree plus one, and where the points of the respective point cloud discretizing the gasket are not repeated;

- one or more iterations of:

  ∘ discretizing the partial differential equation, the partial differential equation modeling the time evolution of the shape of the gasket, with a discontinuous Galerkin method (for example IPDG Galerkin) of which basis is the basis of multivariate splines, including:

    ■ defining boundary conditions and/or flux conditions of the Galerkin method; and
    ■ forming the Galerkin matrix;

  or updating the discretization of the partial differential equation based on the result of a previous iteration, including:

    ■ updating boundary conditions and/or flux conditions of the Galerkin method; and/or
    ■ updating the Galerkin matrix;

  ∘ performing a simulation run based on the discretization of the partial differential equation and on the hybrid discretization;
  ∘ assessing a deformation as a result of the simulation run, the deformation being a deformation of the shape of the gasket caused by physical constraints exerted on the gasket by the other part(s), the assessing of the deformation comprising:

    ■ determining a mechanical stress exerted on the gasket due to the physical constraints; and
    ■ determining a shape deformation of the gasket based on the mechanical stress;

  ∘ updating the hybrid discretization to model the deformation by moving points of the point cloud discretizing the gasket, thereby updating the discretization of the gasket to model its deformation.

The method thereby allows to determine/simulate the shape of a gasket subject to significant deformations. For example, the gasket may be a rubber gasket subject to strong primary deformations (*e.g.* a confined gasket) and then to a secondary deformation (*e.g.* twist or shear stress) for which a suitable meshing or a structured B-splines or NURBS representation would not be possible. The method allows for example to optimize the shape of the gasket in response to the deformation, *e.g.* for improving elasticity of the gasket and/or improving its response to deformation-causing constraints. For example, the constraints to which the gasket is subject may be parameters of the partial differential equation so that during the simulation, the shape of the gasket will be optimized with respect to the constraints by simulating the partial differential equation (*i.e.* the method solves an optimization problem).

In another example, the mechanical part includes a wind turbine or a mechanical part thereof subject to deformations or vibrations caused by physical constraints exerted by a fluid (*e.g.* air). In this case, the method may comprise:

- providing the geometrical model representing the wind turbine or the mechanical part thereof, the wind turbine or the mechanical part thereof being subject to constraints exerted by a fluid such as the air during the simulation;
- performing the hybrid discretization of the model, comprising, discretizing a portion of the wind turbine or the mechanical part thereof with a point cloud and another portion by a mesh, the portion undergoing shape deformations due to the physical constraints exerted by the fluid and the other portion remaining in shape during the simulation:

  ∘ discretizing the portion undergoing shape deformations and the other portion each with a respective point cloud;
  ∘ providing the basis of multivariate splines, where the splines have a same degree, where the points of the respective point cloud discretizing the other portion are repeated a number of times equal to said same degree plus one, and where the points of the respective point cloud discretizing the portion undergoing shape deformations are not repeated;

- one or more iterations of:

  ∘ discretizing the partial differential equation, the partial differential equation modeling the time evolution of the shape of the portion undergoing shape deformations due to the constraints exerted by the fluid, with a discontinuous Galerkin method (for example IPDG Galerkin) of which basis is the basis of multivariate splines, including:

    ▪ defining boundary conditions and/or flux conditions of the Galerkin method; and
    ▪ forming the Galerkin matrix;

  or updating the discretization of the partial differential equation based on the result of a previous iteration, including:

    ▪ updating boundary conditions and/or flux conditions of the Galerkin method; and/or
    ▪ updating the Galerkin matrix;

  ∘ performing a simulation run based on the discretization of the partial differential equation and on the hybrid discretization;
  ∘ assessing a deformation as a result of the simulation run, the deformation being a deformation of the shape of the portion undergoing shape deformations caused by the physical constraints exerted by the fluid, the assessing of the deformation comprising:

    ▪ determining a mechanical stress exerted on the portion by the physical constraints; and
    ▪ determining a shape deformation of the portion based on the mechanical stress;

  ∘ updating the hybrid discretization to model the deformation by moving points of the point cloud discretizing the portion undergoing shape deformations, thereby updating the discretization of this portion to model its deformation.

The method thereby allows to determine/simulate the shape of a wind turbine subject to significant deformations caused by a fluid such as the wind. This allows for example to optimize the shape of the wind turbine in response to the deformation, e.g. for an optimal functioning in specific wind conditions. For example, the constraints to which the wind turbine is subject may be parameters of the partial differential equation so that during the simulation, the shape of the wind turbine will be optimized with respect to the constraints by simulating the partial differential equation (*i.e.* the method solves an optimization problem).

In another example, the mechanical part includes battery with electrodes and electrolytes. The battery is subject to interactions between the electrolytes and ions, which cause deformations of the electrolytes. In this case, the method may comprise:

- providing the geometrical model representing the battery, the battery being subject to interactions between the electrolytes and ions;
- performing the hybrid discretization of the model, comprising, discretizing a the electrolytes with a point cloud and the electrodes with a mesh, the electrolytes undergoing shape deformations due to the interaction with ions and the electrode remaining in shape during the simulation:

  ◦ discretizing the electrolytes and the electrodes each with a respective point cloud;
  ◦ providing the basis of multivariate splines, where the splines have a same degree, where the points of the respective point cloud discretizing the electrodes are repeated a number of times equal to said same degree plus one, and where the points of the respective point cloud discretizing the electrolytes are not repeated;

- one or more iterations of:

  ◦ discretizing the partial differential equation, the partial differential equation modeling the time evolution of the shape of the electrolytes due to the interactions with ions, with a discontinuous Galerkin method (for example IPDG Galerkin) of which basis is the basis of multivariate splines, including:

    ▪ defining boundary conditions and/or flux conditions of the Galerkin method; and
    ▪ forming the Galerkin matrix;

  or updating the discretization of the partial differential equation based on the result of a previous iteration, including:

    ▪ updating boundary conditions and/or flux conditions of the Galerkin method; and/or
    ▪ updating the Galerkin matrix;

  ◦ performing a simulation run based on the discretization of the partial differential equation and on the hybrid discretization;
  ◦ assessing a deformation as a result of the simulation run, the deformation being a deformation of the shape of the electrolytes caused by the interactions with the ions, the assessing of the deformation comprising:

    ▪ determining interactions between the electrolytes and ions; and
    ▪ determining a shape deformation of the electrolytes based on the interactions;

  ◦ updating the hybrid discretization to model the deformation by moving points of the point cloud discretizing the electrolytes, thereby updating the discretization of the electrolytes to model their deformation.

The method thereby allows to capture effects of the tortuosity and of the interconnexions of the electrolytes on the battery's performances, *e.g.* by determining, based on the simulation performed by the method, scattering curves of the galvanostatic charge/discharge and thus for example performances of cycles of charge/discharge of the battery.

The method is now illustrated with reference to FIG. s 1 to 8.

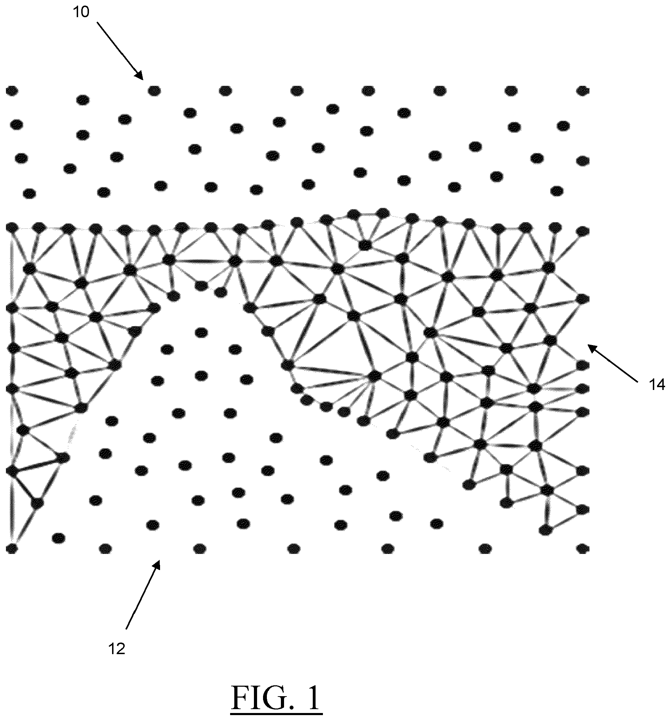

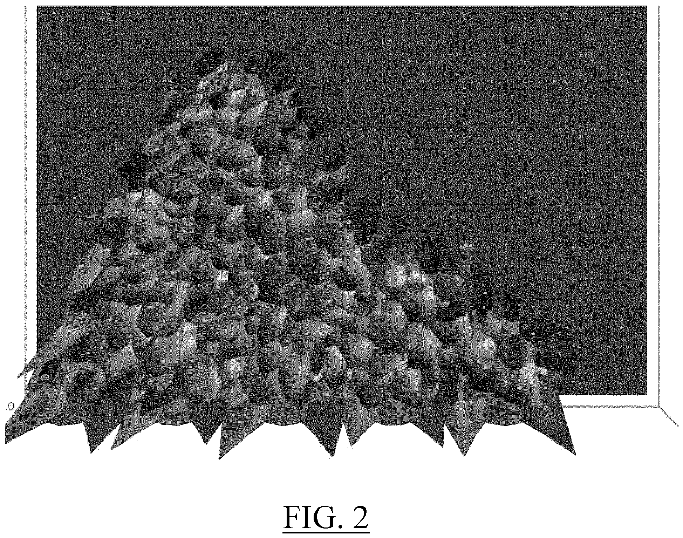

FIG. 1 shows a hybrid discretization of a domain, with repeated points yielding a mesh of a portion of the model. The discretization shown in FIG. 1 comprises a first point cloud 10, a second point cloud 12, and a triangular mesh 14.FIG. 2 shows the spline basis functions supported on the sub-domain of the domain of FIG. 1 discretized by point cloud 12.

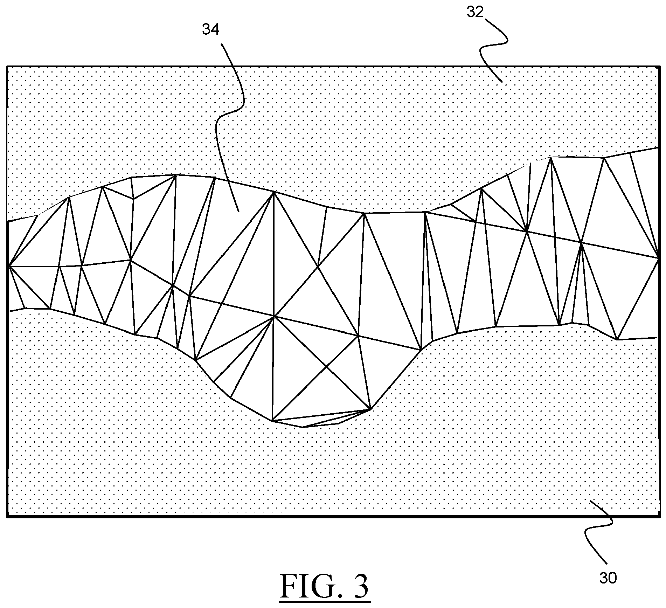

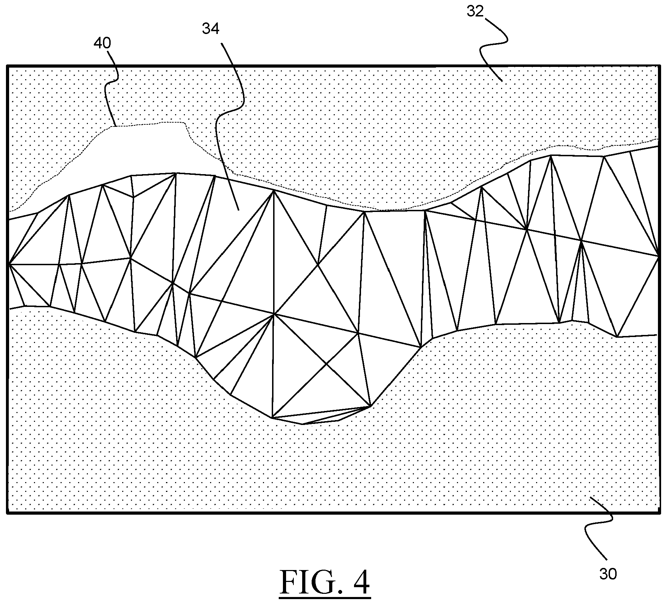

FIG.s 3 and 4 illustrate an application of the method to flow simulation. FIG. 3 shows a geomodel of a portion of the subsoil comprising an underburden 30, an overburden 32, and a reservoir 34 comprising fluid. FIG. 3 shows the hybrid discretization of the geomodel: overburden 32 and underburden 30, which are to undergo shape deformations during the simulation due to mechanical stress exerted on them by fluid displacement, are discretized each with a point cloud, as shown on FIG. 3, while reservoir 34 is discretized with a mesh, as shown on FIG. 3. FIG. 4 shows the updated hybrid discretization to model a deformation of overburden 32 as a result of a simulation run. Dotted line 40 shows the new bottom border of overburden 32 as a result of the shape deformation it has undergone.

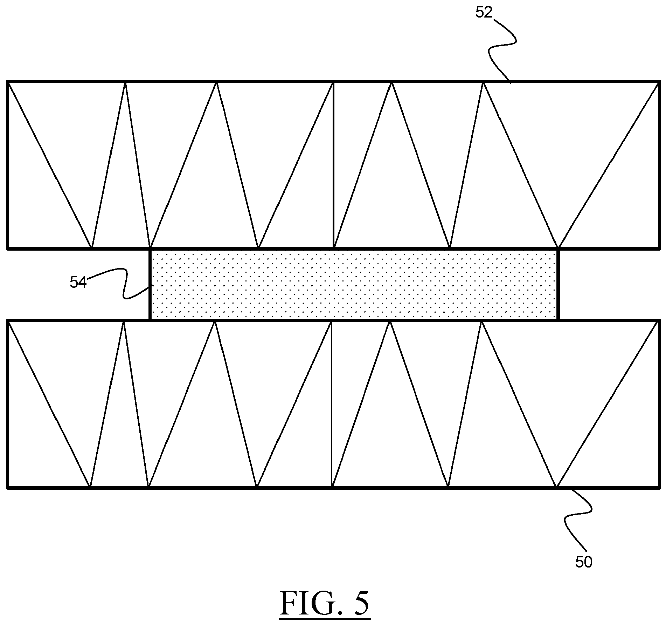

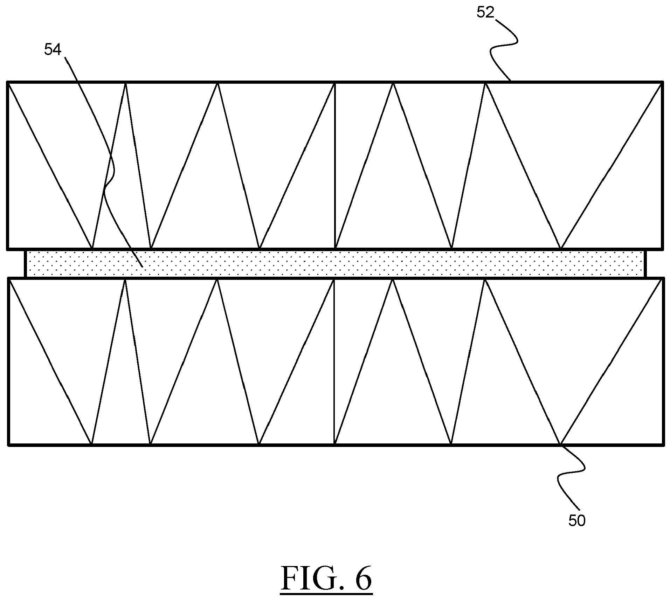

FIG.s 5 and 6 illustrate an application of the method to the simulation of a gasket 54 of a mechanical part also comprising a first rigid part 50 and a second rigid part 52. During use of the mechanical part, rigid part 52 compresses gasket 54 against part 50, which thereby undergoes a deformation caused by the mechanical stress resulting from the compression. FIG.5 shows a geometrical model of the mechanical part comprising. FIG. 6 shows the hybrid discretization of the model: part 52 and part 50, which are to remain shape during the simulation, are discretized each with a mesh, as shown on FIG. 5, while gasket 54, to undergo a shape deformation during the simulation, is discretized with a point cloud, as shown on FIG. 5. FIG. 6 shows the updated hybrid discretization to model a deformation of gasket 54 as a result of a simulation run. As shown on FIG. 6, gasket 54 has been compressed by part 52.

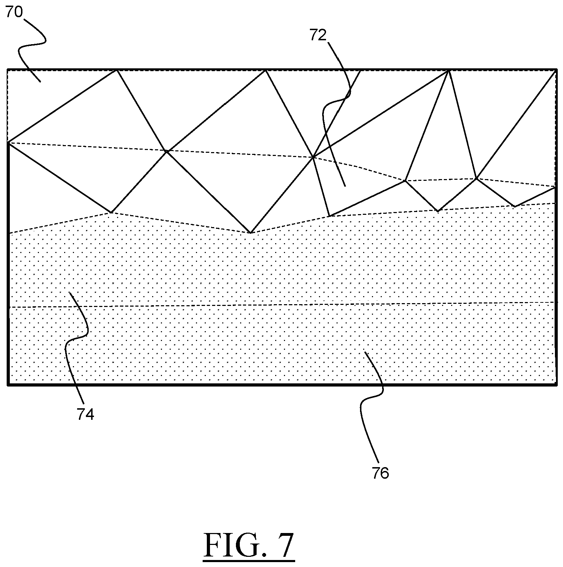

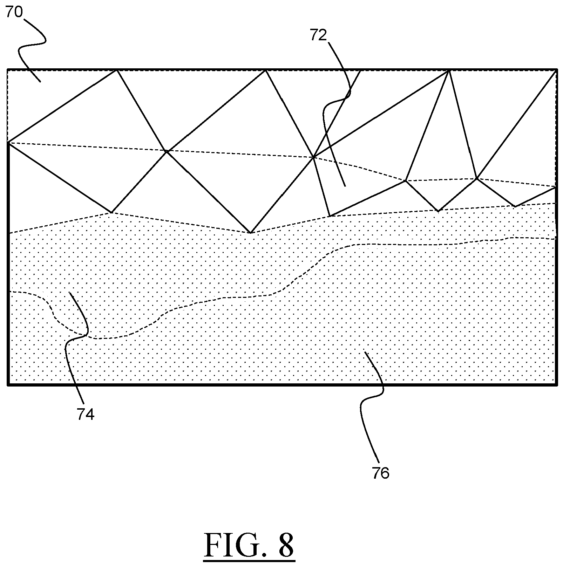

FIG. 7 and 8 illustrate an application of the method to a seismic simulation. FIG. 7 shows a hybrid discretization of a model of the subsoil, including geological layers 70, 72, 74 and 76. Dotted lines represent the geological horizons, forming delimitations between the layers. As shown on FIG. 7, layers 70 and 72 are discretized with each a mesh, as their positions are known and unlikely to change shape to match seismic measurements during the simulation. Layers 74 and 76 are discretized each with a point cloud as their positions are not well known and they are thus likely to change shape during the simulation to match seismic measurements. FIG. 8 shows the updated discretization, where layers 74 and 76 have changed shape as a result of the simulation run. Their position and the geological layer between them are updated and better match the seismic measurements.

The method is computer-implemented. This means that steps (or substantially all the steps) of the method are executed by at least one computer, or any system alike. Thus, steps of the method are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

FIG. 9 shows an example of the system, wherein the system is a client computer system, *e.g.* a workstation of a user.

The client computer of the example comprises a central processing unit (CPU) 1010 connected to an internal communication BUS 1000, a random access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks; and CD-ROM disks 1040. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method.

## Claims

1. A computer-implemented method for performing a deformation-based physics simulation described by a partial differential equation, the method comprising:

    - providing a geometrical model representing a portion of the real world;
    - performing a hybrid discretization of the model, comprising discretizing one or more first objects in the portion each with a mesh and one or more second objects in the portion each with a point cloud;
    - one or more iterations of:

○ performing a simulation run based on a discretization of the partial differential equation and on the hybrid discretization;
○ assessing a deformation as a result of the simulation run, the deformation corresponding to a shape deformation of the one or more second objects; and
○ updating the hybrid discretization to model the deformation by moving points of a point cloud.

2. The method of claim 1, wherein the performing of a hybrid discretization comprises:

- discretizing each object in the portion, each with a respective point cloud;
- providing a basis of interpolating piecewise polynomial functions, where for each subset of points of a point cloud discretizing a first object or of a point cloud boundary, at least one function is constant, discontinuous and non-zero on the face defined by the points, each first object being thereby meshed.

3. The method of claim 2, wherein the functions are unstructured multivariate splines.

4. The method of claim 3, wherein points of each respective point cloud discretizing a second object are not repeated.

5. The method of claim 3 or 4, wherein the splines have a same degree, the points of each respective point cloud discretizing a first object and the points belonging to each point cloud boundary being repeated with a multiplicity equal to said same degree plus one.

6. The method of claim 5, wherein the functions of the basis are functions of the type $f_I^k$, defined for each domain $D_k$, each degree $p = 1, ..., p_{max}$, and each set of indices $I$ corresponding to at least one couple $(I, B)$ in $IB_p$ by the formula

$$f_I^k(x) = \sum_{(I,B)} \det((a_i, 1)_{i \in B})\, M(x, I \cup B),$$

where the sum is over all the couple $(I, B)$ in $IB_p$ sharing the same $I$ and that that lie in the same domain $D_k$, where $IB$ is a set of couples of indices $(I, B)$ such that the parallelepipeds

$$\Pi_{I,B} = \sum_{i \in I}(a_i, 1) + \sum_{b \in B}[0, (a_b, 1)]$$

form a subdivision of the polytope

$$Z(V) = \sum_{i=1}^{n}[0, (a_i, 1)]$$

where all the sums are intended as Minkowski sums, $IB_p$ being the set of such indices that have exactly p elements in the set $I$, where M is a spline function defined recursively by the formula

$$M(x|(a_i)_{i \in X}) := \begin{cases} \dfrac{d!}{\det(X)}\, 1_X(x) & \text{if } k = 0, \\[2ex] \dfrac{k+d}{k} \displaystyle\sum_{b \in Y} \dfrac{\det\binom{x}{b}B)}{\det(B)} M(x|(a_i)_{i \in B \setminus \{b\}}) & \text{otherwise} \end{cases}$$

where X is a set of k+d+1 indices of point, Y being a subset of X of size d+1 such that all the points $(a_i)_{i \in Y}$ are affinely independent, where if no such Y exists, the spline is zero everywhere, where A={$a_1$, ..., $a_n$} is the set of point cloud points, $d$ is the dimension, {$b$, ..., $b_n$} is the multiplicity of each point, {$D_1$, ..., $D_k$} is a set of domains, each delimited

by faces $F = \{f_1^k, \ldots, f_{n_k}^k\}$ defined with points in A, and $p_{max}$ is a desired polynomial order.

7. The method of any one of claims 2 to 6, wherein the performing of the simulation run comprises performing a Galerkin discretization method based on the basis of functions, the Galerkin discretization method optionally being a discontinuous Galerkin discretization method.

8. The method of any one of claims 1 to 7, wherein the simulation is a simulation of a portion of the subsoil subject to hydrocarbon production and/or exploration and/or $CO_2$ storage, the model being a geomodel, the model comprising a first part to remain in shape during the simulation and a second part to undergo a deformation during the simulation.

9. The method of claim 8, wherein the simulation is a flow simulation, the portion of the subsoil including a reservoir in which fluid flows, and an underburden and an overburden, the fluid flow causing deformation of the underburden and/or the overburden.

10. The method of any one of claims 1 to 7, wherein the simulation is a seismic simulation for hydrocarbon production and/or exploration and/or $CO_2$ storage, the model representing a domain of the subsoil, the model including a distribution of velocities and densities on the domain, the distribution of velocities undergoing deformation during the simulation to match seismic measurements.

11. The method of any one of claims 1 to 7, wherein the simulation is a simulation of a mechanical part subject to a deformation caused by physical constraints, the model representing the mechanical part.

12. The method of claim 11, wherein:

the mechanical part includes a gasket subject to a deformation caused by physical constraints exerted by one or more other parts;
the mechanical part includes a wind turbine or a mechanical part thereof, subject to vibrations or deformations caused by physical constraints exerted by a fluid; or
the mechanical part includes a battery with electrodes and electrolytes, the battery being subject to interactions between the electrolytes and ions.

13. The method of any one of claims 1 to 7, wherein the simulation is a simulation of a domain of the real world comprising a sub-domain to undergo a deformation during the simulation and a sub-domain to remain in shape, the model representing the domain.

14. A computer program having recorded thereon instructions for performing the method of any one of claims 1 to 13.

15. A computer comprising a processor coupled to a memory, the memory having recorded thereon the computer program of claim 14.

FIG. 1

FIG. 2

FIG. 3

FIG. 4

FIG. 5

FIG. 6

FIG. 7

FIG. 8

1000

1010 CPU

1070 RAM

1020 Mass storage devices controler

1080 Display

1030 Hard drive

CDROM

1090 Haptic device

1040

Network Adapter

Video RAM

1050

1100

Network

GPU

1060

1110

B
U
S

FIG. 9

Europäisches
Patentamt

European
Patent Office

Office européen
des brevets

# EUROPEAN SEARCH REPORT

Application Number

EP 21 30 5691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Fuchs Sebastian L ET AL: "A novel smoothed particle hydrodynamics and finite element coupling scheme for fluid-structure interaction: The sliding boundary particle approach", <br> 18 May 2021 (2021-05-18), pages 1-31, XP055849292, DOI: 10.1016/j.cma.2021.113922 Retrieved from the Internet: URL:https://arxiv.org/pdf/2010.09526.pdf [retrieved on 2021-10-08] <br> * the whole document * <br> * figure 1 * <br> * page 4, last paragraph * <br> * page 8, last paragraph - page 9, paragraph 4 * <br> * figure 2 * <br> * page 15, paragraph 3 - page 16, paragraph 1 * <br> ----- | 1-15 | INV. G06F30/20 G06F30/23 G06F30/25 G06F30/28 <br><br> ADD. G06F111/10 G06F113/06 G06F113/08 |
| X | ASADI HOSSEIN ET AL: "Investigation of Hydrodynamically Dominated Membrane Rupture, Using Smoothed Particle Hydrodynamics-Finite Element Method", FLUIDS, vol. 4, no. 149, 3 August 2019 (2019-08-03), pages 1-17, XP055849288, DOI: 10.3390/fluids4030149 <br> * the whole document * <br> * page 4, paragraph 4 * <br> * figure 1 * <br> * page 5, paragraph 1 * <br> * figure 2 * <br> * page 6, paragraph 1 * <br> * figures 5, 6 * <br> ----- <br><br> -/-- | 1-15 | TECHNICAL FIELDS SEARCHED (IPC) <br><br> G06F |

The present search report has been drawn up for all claims

| Place of search | Date of completion of the search | Examiner |
|---|---|---|
| Munich | 8 October 2021 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEN BELGACEM I ET AL: "Numerical Analysis of the Behavior of A New Aeronautical Alloy (Ti555-03) Under the Effect of A High-Speed Water Jet", CHINA OCEAN ENGINEERING, HAIYANG CHUBANSHE, BEIJING, CN, vol. 33, no. 1, 31 January 2019 (2019-01-31), pages 114-126, XP036689955, ISSN: 0890-5487, DOI: 10.1007/S13344-019-0012-X [retrieved on 2019-01-31] * the whole document * * page 117, column 2, paragraph 2 * * page 119, column 2, paragraph 1 * * page 120, column 1, last paragraph - column 2, paragraph 2 * * page 124, column 2, last paragraph - page 125, column 2, paragraph 1 * * figures 9, 14, 16, 21 * ----- | 1-15 | |

TECHNICAL FIELDS
SEARCHED      (IPC)

The present search report has been drawn up for all claims

| Place of search | Date of completion of the search | Examiner |
|---|---|---|
| Munich | 8 October 2021 | Wellisch, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2